# EUROPÄISCHE PATENTSCHRIFT

(11) **EP 0 509 244 B1**
(45) Veröffentlichungstag und Bekanntmachung des Hinweises auf die Patenterteilung: **09.08.1995**
(21) Anmeldenummer: 92104376.6
(22) Anmeldetag: 13.03.1992
(51) Int. Cl.: G01B 7/14, G01M 15/00

(54) **Sensor und Verfahren zur Messung der Position eines Dämpfungskolbens in einem Dämpfungszylinder eines Schwingungsdämpfers**
Sensor and method for measuring the position of a damping piston within a damping cylinder of an oscillation damper
Palpeur et méthode pour mesurer la position d'un piston d'amortissement dans un cylindre d'amortissement d'un amortisseur d'oscillations

(30) Priorität: 15.04.1991 DE 4112276
(43) Veröffentlichungstag der Anmeldung: 21.10.1992
(73) Patentinhaber: AUGUST BILSTEIN GMBH & CO. KG, 58240 Ennepetal (DE)
(72) Erfinder: Bösebeck, Peter, W-5828 Ennepetal (DE); Gesenhues, Ludger, Dipl.-Ing., W-5810 Witten 7 (DE)

(56) Entgegenhaltungen:
- EP-A- 0 303 563
- DE-A- 3 538 349
- DE-A- 3 636 837

## Beschreibung

Die Erfindung bezieht sich auf ein Verfahren zur Messung der momentanen Position eines mit einer Kolbenstange verbundenen Dämpfungskolbens in einem aus magnetisierbaren Material bestehenden Dämpferzylinders eines Schwingungsdämpfers für Kraftfahrzeuge, der ein mit der Kolbenstange in Wirkverbindung stehendes Schutzrohr aufweist.

Derartige Schwingungsdämpfer werden als Bindeglieder zur Übertragung der Schwingungen von der Fahrbahnoberfläche über das Rad-Federsystem auf die Karosserie eingesetzt. Zur Gewährleistung eines hohen Fahrkomforts als auch einer größeren Fahrsicherheit kommen sehr oft Schwingungsdämpfer mit semiaktiver oder aktiver Dämpfungsregelung zum Einsatz. Für eine solche Regelung ist es notwendig, die unterschiedlichsten Bewegungs- und Positionsgrößen zu erfassen und dem Regelkreis zuzuführen, wobei die Positionsmessung des Dämpfungskolbens im Dämpfungszylinder den Vorteil aufweist, ein Signal der momentanen Einfahrstellung des Schwingungsdämpfers für eine eventuell vorhandene Niveauregelung und über Differensation die notwendigen Bewegungsgrößen für die Dämpfungsregelung zu liefern.

Aus der deutschen Offenlegungsschrift DE OS 35 38 349 sind mehrere Einrichtungen zur Ermittlung der Bodenfreiheit eines Fahrzeuges bekannt. Auch hier beinhaltet der Sensor eine mit dem Dämpferzylinder verbundene Spule. So wird zum Beispiel auf den dort geseigten Dämpfungszylinder eine aus Primär- und Sekundärwicklung bestehende Spule aufgeschoben und von einem Spannungs-/Frequenzgenerator gespeist. Die Position des Dämpfungskolbens wird ermittelt, indem durch das leitfähige Material des Dämafungskoblens der durch die Spule erzeugte magnetische Fluß gedämpft wird und sich aufgrund der induzierten Ströme eine Abschwächung des hoch-. frequenten Signals an den Spulenenden ergibt. Nachteilig wirkt sich bei dieser Meßeinrichtung aus, daß sowohl der Dämpfungskolben als auch die aus leitfähigem Material bestehende Kolbenstange den magnetischen Fluß dämpft und ein genaues Meßergebnis nur bei Vorderachs-Federbeinen, bei denen zwischen Kolbenstange und Dämpfungskolben nur konstruktiv bedingt eine geringe Querschnittsänderung vorhanden ist, erhalten wird. Um für eine Regelung auswertbare Meßsignale zu erhalten, muß der Dämpfungszylinder aus nichtmagnetisierbaren Material bestehen. Der Sensor ist also nur bei speziellen Schwingungsdämpfern einsetzbar.

Eine weitere Schwierigkeit zeigt sich insbesondere bei Einrohrschwingungsdämpfern, die nicht wie der in der DE OS 35 38 329 geseigte Dämpfer von einem Koaxial ungebenden Ausgleichsraum umhüllt sind, darin, daß die Anschlüsse der auf den Dämpfungszylinder aufgeschobenen Wicklungen bei dem bekannten Sensor während des Fahrbetriebs einer hohen Beanspruchung durch die Radbewegung sowie Schmutz- und Nässeeinwirkungen ausgesetzt sind.

Die DE-OS 36 36 837 zeigt ein Induktivmeßgerät, welches durch Umschaltung der Anschlüsse zwischen Bezugsspannungsquelle und Auswerteelektronik verschiedene Konfigurationen von in Reihe geschalteter Induktivität und zugehörigem Reihenwiderstand herstellt, welche eine sehr schnelle und genaue Messung erlaubt.

Zur Anwendung bei der Messung von Stellungen eines Stoßdämpferzylinders relativ zum Dämpferkolben ist dieses System durch die sich ständig ändernde Induktivität nur bedingt anwendbar.

Die EP 0 303 563 A2, die eine Anordnung zur Temperaturkompensation für Sensoreinrichtungen offenbart, weist bezüglich der Verwendung in Stoßdämpfersystemen ebenfalls den Nachteil auf, daß die sich ändernden Beeinflussungen von Induktivitäten und Widerständen innerhalb des Kolbendämpfersystems einen sehr komplizierten Aufbau der Meßeinrichtung erfordern und zudem in ihrer Nachführung schwierig sind.

Damit besteht die Aufgabe der Erfindung darin, einen Sensor und ein Verfahren zur Messung der Position eines Dämpfungskolbens in einem Dämpfungszylinder zu schaffen, wobei der Sensor einen unkomplizierten und robusten Aufbau aufweisen soll, die Zuleitungen des Sensors keiner hohen Beanspruchung ausgesetzt sind und das Verfahren für eine Regelung genaue auswertbare Meßsignale liefert.

Die Aufgabe der Erfindung wird durch einen Sensor und ein Verfahren zur kontinuierlichen Messung der momentanen Position eines Dämpfungskolbens in einem Dämpferzylinder nach den Merkmalen der Patentansprüche gelöst.

Der Aufbau des erfindungsgemäßen Sensors aus der im Schutzrohr eingebetteten oder auf diesen aufgebrachten zylindrischen Spule und dem den Magnetkern bildenden Dämpfungszylinder weist den Vorteil auf, daß er leicht vormontierbar ist und fast alle verschiedenen Typen von Schwingungsdämpfern durch Austausch des Schutzrohres nachrüstbar sind. Bei einem Ausfall des Sensors ist dieser ohne Aufwand auswechselbar. Die Sensoranschlüsse können zur Karosserieseite nach außen geführt werden und unterliegen nicht in dem Maß der Beanspruchung der Radbewegung und der Spritznässe. Das erfindungsgemäße Verfahren liefert dem Kolbenweg proportionale Signale, Positionssignale für die Niveauregelung und über die Differensation liefert es Bewegungssignale, wie Relativgeschwindigkeit zwischen Aufbau- und Achse und/oder Aufbaubeschleunigung, die für die Dämpfungsregelung genutzt werden können.

Die Erfindung soll anhand der nachfolgenden Zeichnungen näher erläutert werden.
- Fig. 1: Einrohrschwingungsdämpfer mit Sensor
- Fig. 2: Schaltungsanordnung zur Durchführung des Verfahrens
- Fig. 3: Schaltungsanordnung zur Durchführung des Verfahrens
- Fig. 4: Verlauf des Positionssignals

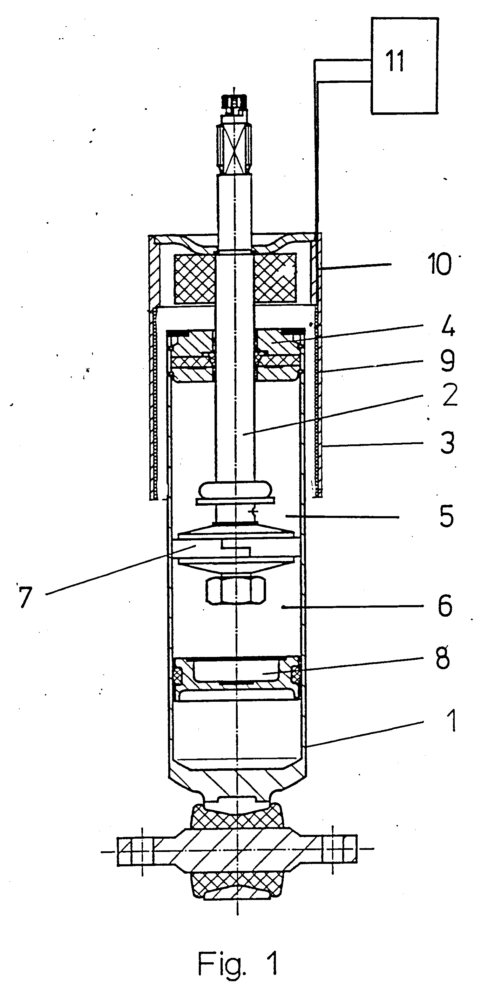

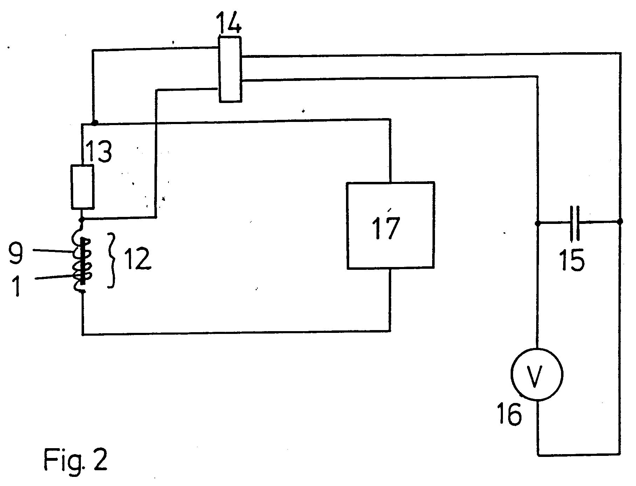

Der in Figur 1 dargestellte hydraulische, regelbare Einrohrschwingungsdämpfer besteht im wesentlichen aus einem Dämpferzylinder 1, der durch einen Führungsverschluß 4 verschlossen ist, und einem mit einer Kolbenstange 2 verbundenen, aus nicht magnetisierbarem Material bestehenden Schutzrohr 3. Im Dämpferzylinder 1 befinden sich zwei Arbeitsräume 5, 6 die durch den fest mit der beweglichen Kolbenstange 2 verbundenen Dämpfungskolben 7 voneinander getrennt werden. Unterhalb des Trennkolbens 8 befindet sich ein gasgefüllter Ausgleichsraum, welcher zur Kompensation der Volumenzu- bzw. -abnahme im hydraulischen Arbeitsraum durch das ein- bzw. ausfahrende Eigenvolumen der Kolbenstange 2 dient. Das aus nichtmagnetisierbaren Material bestehende Schutzrohr 3 ist derart ausgebildet, daß es einseitig offen und über den Dämpferzylinder gestülpt ist. In der Wandung des Schutzrohres 3 befindet sich eingebettet eine zylindrische Spule 9, die sich über die gesamte Länge des Schutzrohrs 3 erstreckt und mit dem magnetisierbaren Dämpfungszylinder 1 einen veränderlichen induktiven Widerstand bildet. Die elektrischen Anschlüsse 10 der zylindrischen Spule 9 sind in Richtung Fahrzeugaufbau nach außen auf eine Auswerteschaltung 11 geführt, die in Fig. 2 dargestellt ist.

Dem aus zylindrischer Spule 9 und magnetisierbarem Dämpfungszylinder 1 gebildeten induktiven Widerstand 12 wird ein ohmscher Widerstand 13 in Reihe geschaltet. Die eine sinusförmige Wechselspannung von z.B. 300 Hz abgebende Spannungsquelle 17 wird mit der Reihenschaltung aus induktivem und ohmschem Widerstand verbunden.

Taucht nun der Dämpfungszylinder 1 durch die Bewegung des mit dem Schutzrohr 3 über die Kolbenstange 2 in Wirkverbindung stehenden Dämpfungskolben 7 mehr oder weniger in die zylindrische Spule 9 ein, verändert sich der induktive Widerstand 12. Damit ändert sich auch der Strom, der durch die Reihenschaltung aus induktiven und ohmschen Widerstand fließt,sowie der durch den Strom bewirkte Spannungsabfall über dem ohmschen Widerstand 13. Diese Wechselspannung wird im Brükkengleichrichter 14 gleichgerichtet und gegebenenfalls mit Hilfe eines Kondensators 15 geglättet und gemessen. Am Eingang des Voltmeters 16 steht eine Gleichspannung zur Verfügung, die in guter Näherung proportional der Induktivität der zylindrischen Spule 9 in Abhängigkeit der Position des Dämpferzylinders 1 in der Spule 9 ist und ein Maß für die Stellung des Dämpfungskolbens 7 im Dämpfungszylinders 1 darstellt.

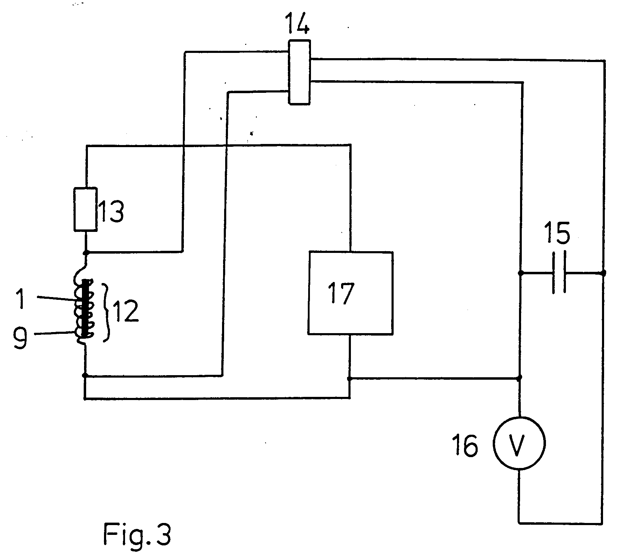

Fig. 3 zeigt eine weitere Variante der Auswerteschaltung. Die Funktion der Schaltungsanordnung entspricht der aus Fig. 2, nur gibt die Spannungsquelle 17 hier eine pulsierende Gleichspannung in Sinusform ab, deren Amplitude geringer sein kann, und der Brückengleichrichter 14 wird parallel zum induktiven Widerstand 12 geschaltet. Bei dieser Variante liegt die Ausgangsspannungsänderung in einem größeren Spannungsbereich und die Positionserfassung ist noch genauer.

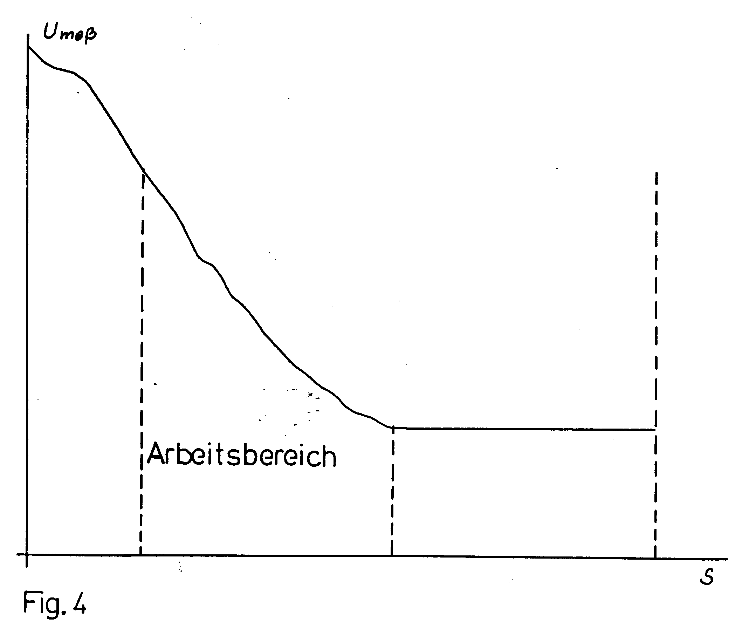

Fig. 4 zeigt eindeutig die proportionale Abhängigkeit der gemessenen Ausgangsspannung U_{meß} vom Weg s des Dämpfungskolbens im Dämpferzylinder.

### Bezugszeichen

- 1.: Dämpferzylinder
- 2.: Kolbenstange
- 3.: Schutzrohr
- 4.: Führungsverschluß
- 5.: Arbeitsraum
- 6.: Arbeitsraum
- 7.: Dämpfungskolben
- 8.: Trennkolben
- 9.: zylindrische Spule
- 10.: elektrische Anschlüsse
- 11.: Auswerteschaltung
- 12.: induktiver Widerstand
- 13.: ohmscher Widerstand
- 14.: Brückengleichrichter
- 15.: Kondensator
- 16.: Voltmeters
- 17.: Spannungsquelle
- s: Weg des Dämpfungskolbens im Dämpferzylinder
- U_{meß}: gemessene Ausgangsspannung

## Patentansprüche

1. Sensor zur kontinuierlichen Messung der momentanen Position eines Dämpfungskolbens (7) in einem aus magnetisierbaren Material bestehenden Dämpferzylinder (1) eines Schwingungsdämpfers, der eine zylindrische Spule (9) aufweist, dadurch gekennzeichnet, daß der Schwingungsdämpfer ein Schutzrohr (3) aufweist und daß das mit der Kolbenstange in Wirkverbindung stehende Schutzrohr (3) die zylindrische Spule (9) beinhaltet, die mit dem Dämpferzylinder (1) einen veränderlichen induktiven Widerstand (12) bildet, der mit einem ohmschen Widerstand (13) in Reihe geschaltet ist und beide mit einer Spannungsquelle (17) pulsförmiger Spannung verbunden sind.

2. Verfahren zur kontinuierlichen Messung der momentanen Position eines Dämpfungskolbens in einem aus ferromagnetischen Material bestehenden Dämpferzylinder eines Schwingungsdämpfers, dadurch gekennzeichnet, daß ein mit der Kolbenstange in Wirkverbindung stehendes Schutzrohr eine zylindrische Spule (9) aufweist und zusammen mit dem aus magnetisierbaren material bestehenden Dämpferzylinders (1) einen veränderlichen induktiven Widerstand (12) bildet, der mit einem ohmschen Widerstand (13) in Reihe geschaltet wird, die Reihenschaltung mit einer pulsförmigen Spannung beaufschlagt wird und die über dem induktiven Widerstand (12) oder dem ohmschen Widerstand (13) abfallende Spannung gemessen und als Meßgröße für die Position des Dämpfungskolbens (7) im Dämpferzylinder (1) genutzt wird.

3. Verfahren nach Anspruch 2, dadurch gekennzeichnet, daß die über dem induktiven oder dem ohmschen Widerstand abfallende Spannung vor der Messung gleichgerichtet und/oder geglättet wird.

4. Verfahren nach Anspruch 2 und/oder 3, dadurch gekennzeichnet, daß die pulsförmige Spannung eine sinusförmige Wechselspannung ist.

5. Verfahren nach Anspruch 2 und/oder 3, dadurch gekennzeichnet, daß die pulsförmige Spannung eine pulsierende Gleichspannung darstellt.

6. Verfahren nach einem oder mehreren der Ansprüche 2 bis 6, dadurch gekennzeichnet, daß die pulsförmige Spannungsquelle (17) eine Spannung mit einer Frequenz, die im Bereich von 100 - 600 Hz liegt, erzeugt.

## Claims

1. Sensor for continuously measuring the instantaneous position of a damping piston (7) in a damping cylinder (1) of a vibration damper, wherein the damping cylinder is made from a magnetizable material and the sensor comprises a cylindrical coil (9), characterised in that the vibration damper comprises a protective tube (3) and that the protective tube (3) which is operatively connected to the piston rod encompasses the cylindrical coil (9) which forms together with the damper cylinder (1) a variable inductive resistance (12) which is connected in series with an ohmic resistance (13) and both are connected to a voltage source (17) of pulse-shaped voltage.

2. Method for the purpose of continuously measuring the instantaneous position of a damping piston in a damping cylinder of a vibration damper, which damping cylinder is made from a ferrous-magnetic material, characterised by the fact that a protective tube operatively connected to the piston rod comprises a cylindrical coil (9) and together with the damping cylinder (1) made from a magnetizable material forms a variable inductive resistance (12) which is connected in series to an ohmic resistance (13), the series circuit is acted upon by a pulse-shaped voltage and the voltage which drops over the inductive resistance (12) or the ohmic resistance (13) is measured and used as a measured variable for the position of the damping piston (7) in the damping cylinder (1).

3. Method according to claim 2, characterised in that the voltage which drops over the inductive or the ohmic resistance is rectified and/or smoothed prior to the measuring process.

4. Method according to claim 2 and/or 3, characterised in that the pulse-shaped voltage is a sine-shaped alternating voltage.

5. Method according to claim 2 and/or 3, characterised in that the pulse-shaped voltage represents a pulsating direct voltage.

6. Method according to any one or several of claims 2 to 6, characterised in that the pulse-shaped voltage source (17) produces a voltage with a frequency which lies in the range of 100 - 600 Hz.

## Revendications

1. Sonde de mesure continue de la position instantanée d'un piston d'amortissement (7) dans un cylindre d'amortisseur (1) en matériau magnétisable, d'un amortisseur de vibrations, qui présente un bobinage (9) cylindrique, caractérisée en ce que l'amortisseur de vibrations présente un tube de protection (3), et le tube de protection (3) en liaison opérante avec la tige de piston contient le bobinage cylindrique (9) qui forme avec le cylindre d'amortisseur (1) une résistance inductive variable (12) qui est branchée en série sur une résistance ohmique (13), et les deux résistances sont reliées à une tension pulsée d'une source de tension (17).

2. Procédé de mesure en continu de la position instantanée d'un piston d'amortissement dans un cylindre d'amortisseur en matériau ferromagnétique d'un amortisseur de vibrations, caractérisé en ce qu'un tube de protection en liaison opérante avec la tige de piston comprend un bobinage cylindrique (9) et forme avec le cylindre d'amortisseur (1) en matériau magnétisable une résistance inductive (12) variable qui est branchée en série avec une résistance ohmique (13), le circuit série est attaqué par une tension pulsée, et la chute de tension aux bornes de la résistance inductive (12) ou de la résistance ohmique (13) est mesurée et utilisée comme grandeur de mesure de la position du piston d'amortissement (7) dans le cylindre d'amortisseur (1).

3. Procédé selon la revendication 2, caractérisé en ce que la chute de tension aux bornes de la résistance inductive ou de la résistance ohmique est redressée et/ou lissée avant la mesure.

4. Procédé selon la revendication 2 et/ou 3, caractérisé en ce que la tension pulsée est une tension alternative sinusoïdale.

5. Procédé selon la revendication 2 et/ou 3, caractérisé en ce que la tension pulsée est une tension continue pulsée.

6. Procédé selon l'une ou plusieurs des revendications 2 à 6, caractérisé en ce que la source (17) de tension pulsée crée une tension à une fréquence située dans la plage de 100-600 Hz.
